# EUROPEAN PATENT APPLICATION

(11) **EP 1 621 877 A1**
(43) Date of publication of application: **01.02.2006**
(21) Application number: 04018102.6
(22) Date of filing: 30.07.2004
(51) Int. Cl.: G01N 27/447, G01N 27/26

(54) **Method for contacting electrode-combs**

(71) Applicant: Julius-Maximilians-Universität Würzburg, 97070 Würzburg (DE)
(72) Inventor: Forchel, Alfred, Prof. Dr., 97074 Würzburg (DE); Worschech, Lukas, Dr., 97337 Dettenbach (DE)
(74) Representative: Elbel, Michaela

(57) **Abstract**

The invention relates to a method for contacting a plurality of electrode-combs being spaced apart in the nanometer range, in which first (30, 34, 38, 42, 46, 50, 54, 58) and second (31, 35, 39, 43, 47, 51, 55, 59) electrode-combs are defined, the first electrode-combs (30, 34, 38, 42, 46, 50, 54, 58) are bypassed by a first contact area (13), the second electrode-combs (31, 35, 39, 43, 47, 51, 55, 59) are provided with first contact elements (22, 23, 24, 25, 26, 27, 28, 29), the first contact area (13) is covered with a first isolation layer (78), and a first comb-like electrode structure (62, 63, 64, 65, 66, 67, 68, 69, 70, 71, 72, 73, 74, 75, 76, 77) is provided over the isolation layer (78). The spacing of the first comb-like electrode structure is smaller than the width of the first contact elements (22, 23, 24, 25, 26, 27, 28, 29). A voltage is provided to the first comb-like electrode structure (62, 63, 64, 65, 66, 67, 68, 69, 70, 71, 72, 73, 74, 75, 76, 77) so that all electrodes of the first comb-like elect-rode structure which are not connected to the first contact element (22, 23, 24, 25, 26, 27, 28, 29) are disconnected. The invention further relates to a device and a kit for the separation of a mixture of charged particles.

## Description

### Field of the invention

The present invention relates to the technical problem of locally controllable ac/dc electrical fields in the range of a few 10 nm and to the technical field of nano- and microstructured, extremely flat electrode systems for contacting of multiple electrode-combs located on or in surfaces of semiconductors or on surfaces consisting of glass and plastics. In this field, the separation and detection of particles with a diameter of only a few nanometers are needed. For the design of new pharmacologically active substances, the electrophoretic separation of integral membrane proteins plays a key role.

Therefore, the invention relates to a method for contacting a plurality of electrode-combs with typical spacings in the range of 10 nm to 10 µm.

This method according to the invention can be used to manufacture a device for electrophoretic separation of membrane proteins.

### Background of the invention

Proteomics has its origin in two-dimensional gel electrophoresis, a technique developed more than two decades ago. Gel electrophoresis has a high resolution capacity, and it was initially used primarily for separating and characterizing proteins in complex mixtures. Two dimensional gel electrophoresis still remains one of the important tools for protein identification, but nowadays it is normally coupled with mass spectrometry. The completion of the human genome project, which was directed to the sequencing of the entire human DNA sequence, has produced a large DNA data base, which can now be utilized through bioinformatics. Next, scientists are striving to uncover the entire proteome of an organism, in particular the human proteome. The analysis of genomic and proteomic data will help to elucidate the function of proteins in the pathogenesis of diseases and the ageing process, and will certainly lead to the discovery of novel drug target proteins and biological markers for diseases.

In particular, the one and two dimensional separation of proteins extending through the membrane (so-called membrane proteins) is a prerequisite for a complete analysis of the proteome of a functionally intact cell or organelle. The German patent application DE 100 27 705 A1 focuses on the separation of membrane proteins in one or two dimensions. It discloses a method in which membranes from cell organelles, whose membrane protein stock should be separated, are placed on planar supports, whose surface was modified using suitable methods in such a manner that the membrane proteins maintain their ability to laterally diffuse in the dimension of the membrane after being placed on a solid support. By subsequently applying electrical fields, the proteins can be electrophoretically displaced in the dimension of the membrane and, as a result, can be separated in one or two dimensions according to their different drift and diffusion characteristics, which primarily depend on their charge characteristics. However, this method is cumbersome as first the surface of the solid support has to be chemically modified so that the adsorption of a biological membrane is possible. As each biological membrane comprises its own characteristics, functions and features, the chemical modification of the surface has to be individually adapted by trial- and-error experiments for each individual membrane. Therefore, the method disclosed in DE 100 27 705 A1 is difficult to reproduce and experiments obtained with one particular membrane may not be conferred to other experimental settings.

With known devices for electrophoretic separation of membrane proteins it is not possible to separate membrane proteins in their natural environment. With such prior art devices, it is only possible to generate electric fields which are insufficient for separating membrane proteins in the context of a cell or cell organelle.

Another problem of such known devices for electrophoretic separation is that any contacting of electrodes in the nanometer range is only possible with high adjusting efforts.

Therefore, it is an object of the present invention to provide a method for contacting a plurality of electrode-combs in the nanometer range, i.e. in the range of 10 nm to 10 µm, without high adjusting efforts. This method is particularly suitable for electrophoretically separating membrane proteins, as the electrode-comb structure of the present invention may be incorporated into living cells, thereby allowing the separation of membrane proteins in their natural environment.

This object is solved by a method for contacting a plurality of electrode-combs being spaced apart in the nanometer range.

In the method of the present invention for contacting a plurality of electrode-combs being spaced apart in the nanometer range, especially in the range between 10 nm and 10 µm,
- at least first and second electrode-combs are defined,
- the first electrode-combs are bypassed by a first contact area,
- the second electrode-combs are provided with first contact elements,
- the first contact area is covered with a first isolation layer,
- a first comb-like electrode structure is provided over the first isolation layer, whereby the spacing of the first comb-like electrode structure is smaller than the width of the first contact elements,
- a voltage is provided to the first comb-like electrode structure so that all electrodes of the first comb-like electrode structure which are not connected to the first contact element are disconnected.

The method according to the invention enables a spacing of the electrode-combs in the nanometer range, especially in the range between 10 nm and 30 µm, preferably 10 nm to 100 nm. By this spacing of the electrode-combs, stray fields in the area above the electrode-combs are minimized. By limiting the spacing of the first comb-like electrode structure to be smaller than the width of the first contact elements, a reliable contacting of the first contact elements is assured.

The first and second electrode-combs are preferably defined in one illumination step by a known method like electron- or ionic beam lithography, photo or imprint lithography. In order to define an array of electrode-combs, the first, second and third electrode-combs are preferably followed by a plurality of further first, second and third electrode-combs. In an advantageous embodiment, third electrode-combs are additionally defined.

Preferably, the first electrode-combs are arranged in such that they extend into the first contact area. Preferably, the first electrode-combs are extended longer to one end than the second and third electrode-combs. The elongation of the first electronic-combs is preferably in the range between 100 nm and 10 µm, however, may also be between 100 nm and 30 µm. By this elongation, a simple and reliable connection of the first contact area by the first electrode-combs is assured without high adjusting efforts.

The comb-like electrode structure preferably consists of a plurality of electrodes, which are arranged in parallel to each other.

The voltage provided to the first comb-like electrode structure for disconnecting the electrodes of the first comb-like electrode structure which are not connected to the first contact element is preferably in the range between 1 - 12 volts. The voltage has to be high enough so that the electrode will be disconnected, i.e. the electrode burns through.

In a preferred embodiment of the invention, the electrodes of the first comb-like electrode structure are connected to a third contact area. The third contact area preferably covers an area which is big enough so that the electrodes of the first comb-like electrode structure may be easily, i.e. with low adjusting efforts, connected to the third contact area.

In another preferred embodiment of the invention, the first contact elements are located at the end of the second electrode-combs which is neighboring the first contact area. By means of this location, contacting of the first contact elements is possible without high adjusting efforts.

In a further preferred embodiment of the invention, fourth electrode-combs are defined. The invention is not limited to contacting three electrode-combs being spaced apart in the nanometer range. With the method according to the present invention it is rather possible to contact four or even more electrode-combs being spaced apart in the range of 10 nm to 10 µm. However, the range depends on which protein or membrane parts are to be separated. Therefore, the range can also be 10 nm to 30 µm. Especially for a device which allows the efficient separation of large and complex integral membrane proteins with a resolution sufficient to identify individual proteins, four separately controllable electrodes in the nanometer range are sufficient to separate such proteins. The present invention provides the advantage that different voltages can be separately applied to the first, second, third and fourth electrode-combs.

In case of four contacts, the electrode array is arranged in such that successively, the first electrode-combs occur each (1 + 4 x n)th time, the second electrode-combs occur each (2 + 4 x n)th time, the third electrode-combs occur each (3 + 4 x n)th time and the fourth electrode-combs occur each (4 + 4 x n)th time (for n = 1, 2, 3, 4 ... etc).

In a still further embodiment of the invention, the fourth electrode-combs are provided with second contact elements. Similarly to the second electrode-combs and the first contact elements, the second contact elements assure reliable contacting without high adjusting efforts.

Preferably, the first, second, third and/or fourth electrode-combs are arranged in parallel to each other. By means of such a parallel arrangement, stray fields in the area above the electrode-combs are minimized. This enables an essentially plane design of the electrode-combs which are arranged as electrode arrays. Especially for a device for separating membrane proteins, it is advantageous that the membrane proteins can be transported over a distance of several µm to about 1 mm.

In another embodiment of the invention, the third electrode-combs are bypassed by a second contact area. Similarly to the first electrode-combs, the third electrode-combs are bypassed by a second contact area so that individual voltage control of the third electrode-combs is possible.

In still another embodiment of the invention, the second contact area is covered with a second isolation layer. Similarly to the first contact area, an isolation layer is provided over the contact area so that no undesired contacting between the comb-like structure and any electrode-comb takes place.

In a further embodiment of the invention, a second comb-like electrode structure is provided over the second isolation layer, whereby the spacing of the comb-like electrode structure is smaller than the width of the second contact elements. These spacing requirements assure reliable contacting of the second contact elements.

In a still further embodiment of the invention, the electrodes of the second comb-like electrode structure are connected to a fourth contact area. Similarly to the spacing of the first comb-like electrode structure, the same contacting takes place at the opposite side of the first contact area. By this provision, a fourth separately controllable contact is installed.

In a still further embodiment of the invention, a voltage is provided to the second comb-like electrode structure so that all electrodes of the second comb-like electrode structure which are not connected to the second contact elements are disconnected. The voltage provided to the first comb-like electrode structure is preferably in the range between 1 - 12 volts. The voltage has to be high enough so that the respective electrodes of the comb-like electrode structure are disconnected, i.e. burn through.

In a still further embodiment of the invention, the first and/or second isolation layer consists of SiO₂. Other isolation materials like Al₂O₃, TiO, MgO or Calixaron may also lead to sufficient results, however, SiO₂ provides the best suited isolation for the method according to the present invention.

In a still further embodiment of the invention, the electrodes of the first comb-like electrode structure and/or the electrodes of the second comb-like electrode structure each comprise a diminution. The diminutions are preferably in the range between 10-100 nm and assure that the undesired electrodes of the comb-like electrode structures are disconnected, i.e. burn through, at the desired locations.

In a still further embodiment of the invention, the diminution of the first comb-like electrode structure is provided at a location close to the third contact area and/or the diminution of the second comb-like electrode structure is provided at a location close to the fourth contact area. By means of this location, any burning of the electrodes in the center of the device, which bears the risk of burning neighboring electrodes or the whole device, is avoided.

In a still further embodiment of the invention, the second contact elements are located at the end of the fourth electrode-combs neighboring the second contact area. Similarly to the first contact elements, this enables convenient contacting of the second contact elements without high adjusting efforts.

In a still further embodiment of the invention, the first contact elements and/or the second contact elements have a rectangular shape. However, other shapes can also be used.

In a still further embodiment of the invention, the first, second, third and/or fourth electrode-combs are provided on a semiconductor-, glass- or plastic surface.

In a further embodiment of the invention, the first, second, third and/or fourth electrode-combs are provided on the surface as wires made of metal. This feature enables a plane design of the electrode-combs which are defining an electrode array. Such an arrangement is especially advantageous for a device for separating membrane proteins.

In a still further embodiment of the invention, the first, second, third and/or fourth electrode-combs are provided in ditches within the surface. This feature enables a plane design of the electrode-combs which are defining an electrode array. Such an arrangement is also especially advantageous for a device for separating membrane proteins.

It is also possible to create planar electrode combs as implanted electrode combs by means of photo lithography or imprint lithography or electron beam lithography in combination with ion implantation. Total planar combs can be realized by defining a negative mask of the comb pattern. An exposure of the uncovered surface (e.g. a conducting layer realized by a doped semiconductor or a thin metal, like Si, GaAs, gold or Pt) to high energy ions (e.g. Ga with 10-100kV acceleration voltage) leads to ion implantation, which in turn destroys the conductivity and form insulating parts. Further, applying ion implantation electrodes equally spaced down to a few 10 nm can be realized. An additional short annealing procedure increases the resistance between different comb electrodes to several mega-ohms with the function to generate strong local electric fields. In this case, no buried layers are requested to enhance a drift/diffusion beyond the comb electrodes.

In a still further embodiment of the invention, the first, second, third and/or fourth electrode-combs have a width between 10 nm and 10 µm. This feature reduces electric stray fields in the array above the electrode combs.

In a still further embodiment of the invention, the first contact elements and/or the second contact elements are defined with the respective electrode-combs by means of electron- or ionic beam lithography, imprint or photo lithography.

The invention also relates to a device which is manufactured by means of a method according to the present invention. Such a device is especially suitable for executing an electrophoretic method for the separation of charged molecules.

The invention therefore also relates to a device for separating a mixture of charged molecules, comprising a plurality of electrode-combs being spaced apart in the nanometer range, especially in the range between 10 nm and 10 µm, in which
- at least first and second electrode-combs are defined,
- the first electrode-combs are bypassed by a first contact area,
- the second electrode-combs are provided with first contact elements,
- the first contact area is covered with a first isolation layer,
- a first comb-like electrode structure is provided over the first isolation layer, whereby the spacing of the first comb-like electrode structure is smaller than the width of the first contact elements,
- a voltage is provided to the first comb-like electrode structure so that all electrodes of the first comb-like electrode structure which are not connected to the first contact element are disconnected.

In a preferred embodiment, the charged particles are negatively or positively charged molecules, in particular biomolecules selected from the group consisting of cells, cell organelles, functional membranes, lipids, polynucleotides, nucleic acids, polypeptides and proteins, in particular membrane proteins.

Lipids include, but are not limited to simple lipids which are found in animal and plant cell membranes. Preferably the lipid is a negatively charged lipid, more preferably a negatively charged phospholipid, and even more preferably a lipid from the group of phosphatidylserine, phosphatidylinositol, phosphatidic acid, and phosphatidyl glycerol. The lipids may also include minor amounts of zwitterionic lipids, cationic lipids or polycationic lipids.

Membrane proteins include integral membrane proteins, also called intrinsic proteins, which have one or more segments interacting directly with the hydrophobic core of the phospholipids' bilayer of the biological membrane. Also included are transmembrane proteins, which span the bilayer and contain polar regions on both sides of the membrane. Several membrane proteins span the bilayer not only once (e.g. glycophorin A from red blood cell membrane) but more than once (up to seven times like e.g. bacterial rhodopsin). Further membrane proteins may be associated with oligosaccharides and phospholipids, or form glycoproteins.

Besides biomolecules, in general any mixture of charged particles, like e.g. ink or toner particles may be separated.

In a third aspect, the invention relates to a kit comprising an electrode-combs structure as defined above for the separation of a mixture of charged particles.

The device and the kit of the present invention are particularly useful for the separation of membrane proteins.

In another aspect, the present invention relates to the application of electric field sequences which lead to mixing of ingredients in membranes or cells. Efficient mixing based on diffusion may take a long time for intact cells or membranes. It is therefore of particular advantage to accelerate the time required for mixing considerably by a chaotic drift motion controlled by electric fields due to the electrode-combs. It is also possible to guide different components to a selected position or side of a membrane or a cell and start local mixing.

The invention is described in more detail below with reference to the enclosed drawings, in which
- Figure 1: schematically shows the structure of a gate electrode consisting of a plurality of wires;
- Figure 2: schematically shows the structure of a gate electrode realized in channels;
- Figure 3: schematically shows a layout of a electrode-comb structure having in each case four contact areas;
- Figure 4: schematically shows a layout of a electrode-comb structure with an isolation layer; and
- Figure 5: schematically shows three drawings of four individually controllable electrodes.

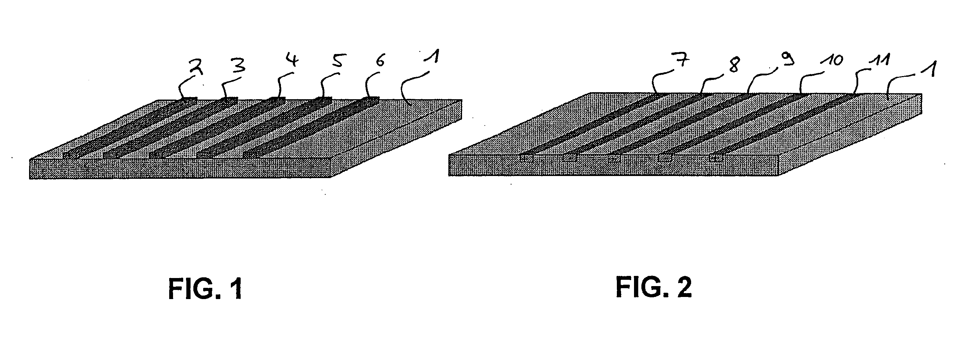

Figure 1 schematically depicts a plane gate electrode 1 having a plurality of electrodes 2, 3, 4, 5, 6. Each electrode 2, 3, 4, 5, 6 can be controlled individually, i.e. the charging of each electrode 2, 3, 4, 5, 6 can be changed separately. The electrodes 2, 3, 4, 5, 6 have a width (depth) of approximately 10 nm and 1 µm and are made of metal. Since the surface of the gate electrode is essentially plane, this arrangement is preferably suitable to be used as a device for separating membrane proteins.

Figure 2 schematically depicts another gate electrode 1 having a plurality of electrodes 7, 8, 9, 10, 11. The electrodes 7, 8, 9, 10, 11 are provided in ditches within the surface of the gate electrode 1. The charging of the electrodes 7, 8, 9, 10, 11 can also be adjusted individually. The electrodes 7, 8, 9, 10, 11 have a width of approximately 10 nm. This arrangement has the advantage that the electrode-comb structure is essentially plane. Therefore, the arrangement can as well be preferably used for separating membrane proteins.

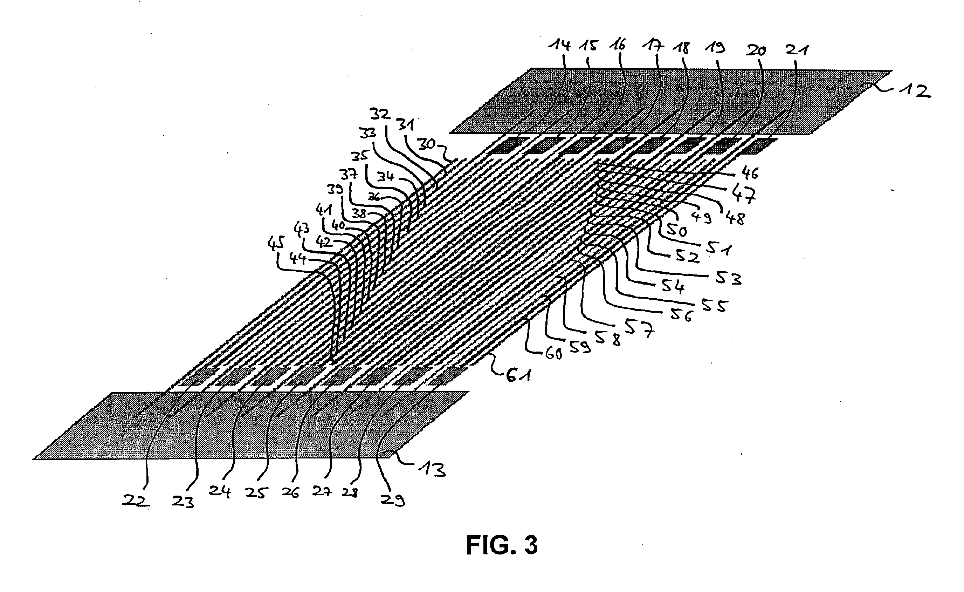

Figure 3 schematically depicts a layout of a electrode-comb structure having in each case four contact areas. In a first illumination step, first 30, 34, 38, 42, 46, 50, 54, 58, second 31, 35, 39, 43, 47, 51, 55, 59, third 32, 36, 40, 44, 48, 52, 56, 60, and fourth 33, 37, 41, 45, 49, 53, 57, 61 electrode-combs are defined. The electrode combs consist of metal and are located on a semiconductor surface (not shown in Figure 3). It is also possible to create such structures by means of ion implantation.

After this first illumination step, the first 30, 34, 38, 42, 46, 50, 54, 58 electrode-combs are bypassed by a first contact area 13, and the third 32, 36, 40, 44, 48, 52, 56, 60 electrode-combs are bypassed by a second contact area 12. It is also possible to execute this illumination simultaneously. The first 30, 34, 38, 42, 46, 50, 54, 58 electrode-combs and the third 32, 36, 40, 44, 48, 52, 56, 60 electrode-combs are respectively extended to the first 13 and second 12 contact area.

In order to contact more than two electrode-combs within one electrode array, four electrodes are arranged in each case next to each other so that an easy contacting from the side for each first 30, 34, 38, 42, 46, 50, 54, 58 and third 32, 36, 40, 44, 48, 52, 56, 60 electrode-comb, i.e. each (1 + 4 x n)th and (3 + 4 x n)th electrode comb (for n = 0, 1, 2, 3 ... etc.), is possible by means of parallel shifting in the front direction or in the direction behind each electrode-comb.

The second electrode-combs 31, 35, 39, 43, 47, 51, 55, 59 are provided with first contact elements 22, 23, 24, 25, 26, 27, 28, 29 and the fourth 33, 37, 41, 45, 49, 53, 57, 61 electrode-combs are provided with second contact elements 14, 15, 16, 17, 18, 19, 20, 21. The first 22, 23, 24, 25, 26, 27, 28, 29 and second 14, 15, 16, 17, 18, 19, 20, 21 contact elements are having essentially rectangular shape, whereby the first 22, 23, 24, 25, 26, 27, 28, 29 contact elements are located in proximity to the first contact area 13 and the second contact elements 14, 15, 16, 17, 18, 19, 20, 21 are located in proximity to the second contact area 12.

In order to reliably contact the first 22, 23, 24, 25, 26, 27, 28, 29 and second contact elements 14, 15, 16, 17, 18, 19, 20, 21 by means of a second illumination step, the adjusting of the contacting of the electrodes would have to take place in the range of some 10 nm. However, if at all, this would only be possible with a high expenditure of time for adjusting the contacting.

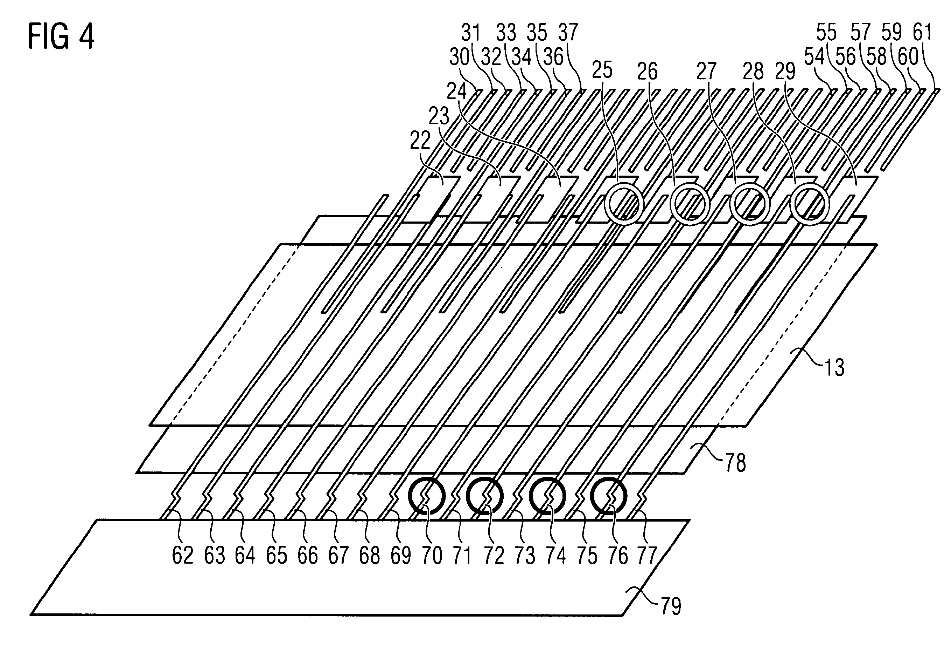

Figure 4 is based on Figure 3 and shows how the second 31, 35, 39, 43, 47, 51, 55, 59 and fourth 33, 37, 41, 45, 49, 53, 57, 61 electrode-combs can be contacted without extensive adjusting efforts. The same reference numbers have the same meaning. The first contact area 13 is covered with an isolation layer 78 made of SiO₂. After this step, a first comb-like electrode structure 62, 63, 64, 65, 66, 67, 68, 69, 70, 71, 72, 73, 74, 75, 76, 77 is provided over the isolation layer 78. In order to assure contacting of each first contact element 22, 23, 24, 25, 26, 27, 28, 29, the spacing of the first comb-like electrode structure has to be smaller than the width of the first contact elements 22, 23, 24, 25, 26, 27, 28, 29.

The same procedure is repeated at the opposite side for the second contact area 21 (not shown in Figure 4).

Each electrode of the first comb-like electrode structure 62, 63, 64, 65, 66, 67, 68, 69, 70, 71, 72, 73, 74, 75, 76, 77 is connected to a third contact area 79. Each of the electrodes comprise a diminution at a location close to the third contact area 79. If a voltage of several volts is applied to the first 30, 34, 38, 42, 46, 50, 54, 58 electrode-combs and the third contact area 79, the electrodes of the comb-like electrode structure 62, 63, 64, 65, 66, 67, 68, 69, 70, 71, 72, 73, 74, 75, 76, 77 which are in contact with the first 30, 34, 38, 42, 46, 50, 54, 58 electrode-combs are disconnected. The electrodes burn-through at its weakest place, i.e. at the place of the diminutions.

As can be seen from Figure 4, the four first electrode-combs at the right side (which are marked by the above four circles) are in contact with four electrodes of the comb-like electrode structure. In case, a voltage is applied to these electrodes, they burn through at the diminutions, as indicated by the four below circles. In Figure 4, the electrodes of the comb-like electrode structure are either in contact with the first contact elements, as it is desired, or are in contact with some of the first 30, 34, 38, 42, 46, 50, 54, 58 electrode-combs, which is not desired. However, since the first 30, 34, 38, 42, 46, 50, 54, 58 electrode-combs are already bypassed by the first contact area 13, the voltage can be applied to the comb-like electrode structure 62, 63, 64, 65, 66, 67, 68, 69, 70, 71, 72, 73, 74, 75, 76, 77 and the undesired contacts are disconnected. For the fourth contacts, this procedure is repeated at the opposite side of the arrangement.

By means of this method, it is possible to provide four separate electrodes in one electrode-comb structure. The electrodes can be controlled separately without the necessity of any further adjustment in the nanometer range.

However, a small spacing of the electrodes is problematic since the membrane proteins have to be transported over a distance of several µm. By this, the proteins can be optically detected. In order to enable smooth movement of the proteins over the electrode-combs, the electrode array consisting of the electrode-combs has to be essentially plane. For such transportation, at least three successively located electrodes have to be controlled individually.

It is even more favorable if four successively arranged electrodes can be controlled separately. Moreover, an electrode array consisting of four contacts has the advantage that the membrane proteins may in a first step be collected by one electrode.

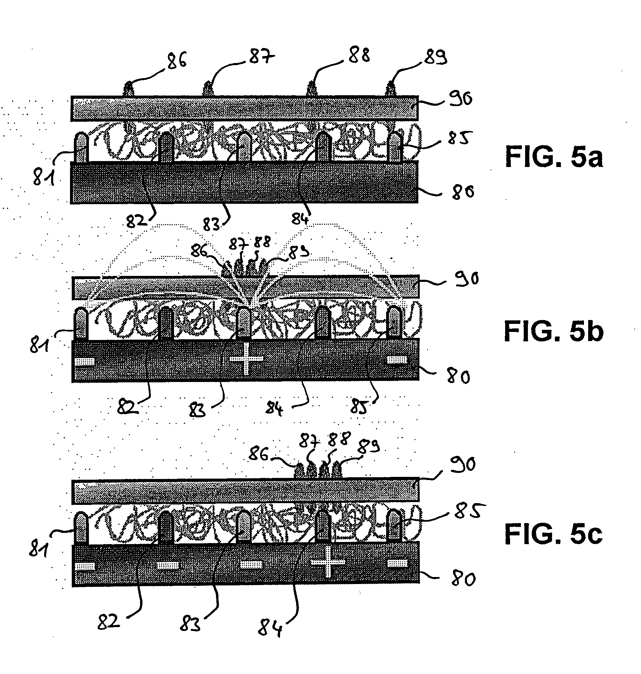

Figures 5a, 5b and 5c schematically show drawings of four individually controllable electrodes. Figure 5a schematically shows a semiconductor or glass surface 80 with five electrodes 81, 82, 83, 84 and 85. The electrodes, which are able to generate an electric field, are in an off-position. A plurality of negatively charged membrane proteins 86, 87, 88 and 89 is randomly distributed above these electrodes 81, 82, 83, 84 and 85. Reference number 90 depicts a membrane.

Figures 5b and 5c schematically show the same surface 80 and the same electrodes 81, 82, 83, 84 and 85. Further, a collection of the membrane proteins 86, 87, 88 and 89 is shown. In figure 5b, the electrodes 81, 82, 83, 84 and 85 are differentially charged. It is exemplarily indicated that electrode 83 has a positive charging and electrodes 81 and 85 have a negative charging. Due to the negative charging of each individual membrane protein 86, 87, 88 und 89, the whole collection of proteins is forced to the positively charged electrode 83. The electrodes 81 and 85 are negatively charged, so that all negatively charged proteins gather around the positively charged electrode 83.

Figure 5c schematically shows the subsequent transportation, i.e. separation, of the membrane proteins 86, 87, 88 and 89 to the right side. By means of a control unit (not shown) which is able to separately control the electrodes 81, 82, 83, 84 and 85, a digital wave can be generated. This digital wave moves the membrane proteins 86, 87, 88 and 89. For this, the electrodes 81, 82, 83 and 85 have a negative charging and the electrode 84 has a positive charging. In a next step of the digital wave (not shown), the electrode 84 will have a negative charging and the electrode 85 will have a positive charging.

## Claims

1. A method for contacting a plurality of electrode-combs being spaced apart in the nanometer range, especially in the range between 10 nm and 10 µm, in which
- at least first (30, 34, 38, 42, 46, 50, 54, 58) and second (31, 35, 39, 43, 47, 51, 55, 59) electrode-combs are defined,
- said first electrode-combs (30, 34, 38, 42, 46, 50, 54, 58) are bypassed by a first contact area (13),
- said second electrode-combs (31, 35, 39, 43, 47, 51, 55, 59) are provided with first contact elements (22, 23, 24, 25, 26, 27, 28, 29),
- said first contact area (13) is covered with a first isolation layer (78),
- a first comb-like electrode structure (62, 63, 64, 65, 66, 67, 68, 69, 70, 71, 72, 73, 74, 75, 76, 77) is provided over said first isolation layer (78), whereby the spacing of said first comb-like electrode structure is smaller than the width of said first contact elements (22, 23, 24, 25, 26, 27, 28, 29), and
- a voltage is provided to said first comb-like electrode structure (62, 63, 64, 65, 66, 67, 68, 69, 70, 71, 72, 73, 74, 75, 76, 77) so that all electrodes of said first comb-like electrode structure which are not connected to said first contact element (22, 23, 24, 25, 26, 27, 28, 29) are disconnected.

2. A method according to claim 1, in which said electrodes of said first comb-like electrode structure (62, 63, 64, 65, 66, 67, 68, 69, 70, 71, 72, 73, 74, 75, 76, 77) are connected to a third contact area (79).

3. A method according to claim 1 or 2, in which said first contact elements (22, 23, 24, 25, 26, 27, 28, 29) are located at the end of said second electrode-combs (31, 35, 39, 43, 47, 51, 55, 59) neighboring said first contact area (13).

4. A method according to any of the claims 1 to 3, in which third (32, 36, 40, 44, 48, 52, 56, 60) or third (32, 36, 40, 44, 48, 52, 56, 60) and fourth (33, 37, 41, 45, 49, 53, 57, 61) electrode-combs are defined and are provided with second contact elements (14, 15, 16, 17, 18, 19, 20, 21).

5. A method according to any of claims 1 to 4, in which a second comb-like electrode structure is provided over said second isolation layer, whereby the spacing of said comb-like electrode structure is smaller than the width of said second contact elements (14, 15, 16, 17, 18, 19, 20, 21).

6. A method according to claim 5, in which a voltage is provided to said second comb-like electrode structure so that all electrodes of said second comb-like electrode structure which are not connected to said second contact elements (14, 15, 16, 17, 18, 19, 20, 21) are disconnected.

7. A method according to any of claims 1 to 6, in which said electrodes of said first comb-like electrode structure (62, 63, 64, 65, 66, 67, 68, 69, 70, 71, 72, 73, 74, 75, 76, 77) and/or said electrodes of said second comb-like electrode structure each comprise a diminution.

8. A device for separating a mixture of charged molecules, comprising a plurality of electrode-combs being spaced apart in the nanometer range, especially in the range between 10 nm and 10 µm, in which
- at least first (30, 34, 38, 42, 46, 50, 54, 58) and second (31, 35, 39, 43, 47, 51, 55, 59) electrode-combs are defined,
- said first electrode-combs (30, 34, 38, 42, 46, 50, 54, 58) are bypassed by a first contact area (13),
- said second electrode-combs (31, 35, 39, 43, 47, 51, 55, 59) are provided with first contact elements (22, 23, 24, 25, 26, 27, 28, 29),
- said first contact area (13) is covered with a first isolation layer (78),
- a first comb-like electrode structure (62, 63, 64, 65, 66, 67, 68, 69, 70, 71, 72, 73, 74, 75, 76, 77) is provided over said first isolation layer (78), whereby the spacing of said first comb-like electrode structure is smaller than the width of said first contact elements (22, 23, 24, 25, 26, 27, 28, 29), and
- a voltage is provided to said first comb-like electrode structure (62, 63, 64, 65, 66, 67, 68, 69, 70, 71, 72, 73, 74, 75, 76, 77) so that all electrodes of said first comb-like electrode structure which are not connected to said first contact element (22, 23, 24, 25, 26, 27, 28, 29) are disconnected.

9. Kit comprising an electrode-combs structure as defined in claims 1 and 8 for the separation of a mixture of charged particles.

10. Use of a device according to claim 8 or a kit according to claim 9 for the separation of membrane proteins.
